(19) Europäisches Patentamt
European Patent Office
Office européen des brevets

(11) **EP 2 011 054 B1**

(12) **EUROPÄISCHE PATENTSCHRIFT**

(45) Veröffentlichungstag und Bekanntmachung des Hinweises auf die Patenterteilung:
**27.02.2013 Patentblatt 2013/09**

(21) Anmeldenummer: **07720071.5**

(22) Anmeldetag: **05.04.2007**

(51) Int Cl.:
*G06K 7/00* (2006.01)   *G06K 7/08* (2006.01)
*H01P 5/18* (2006.01)

(86) Internationale Anmeldenummer:
**PCT/CH2007/000174**

(87) Internationale Veröffentlichungsnummer:
**WO 2007/115422 (18.10.2007 Gazette 2007/42)**

(54) **RFID SCHREIB-/LESESTATION MIT HOHER EMPFINDLICHKEIT**

HIGH-SENSITIVITY RFID READ/WRITE STATION

STATION DE LECTURE/ECRITURE RFID DE SENSIBILITE ELEVEE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **12.04.2006 CH 613062006**

(43) Veröffentlichungstag der Anmeldung:
**07.01.2009 Patentblatt 2009/02**

(73) Patentinhaber: **Intermec IP Corp.
Everett, WA 98203 (US)**

(72) Erfinder:
• **KÜNG, Roland
  8633 Wolfhausen (CH)**
• **HEGNAUER, Stefan
  Dübendorf (CH)**

(74) Vertreter: **Grünecker, Kinkeldey,
Stockmair & Schwanhäusser
Leopoldstrasse 4
80802 München (DE)**

(56) Entgegenhaltungen:
EP-A- 1 050 839     GB-A- 2 331 611
US-A- 5 898 738     US-B1- 6 584 301

**Beschreibung**

Die Erfindung fällt in das Gebiet der Kommunikationstechnik. Sie betrifft eine RFID Schreib-/Lesestation, nachfolgend vereinfacht Lesestation (englisch Reader) genannt, zum Auslesen von Informationen aus in der Regel passiven Transpondern bestehend aus einem Sender, wenigstens einer Antenne mit einer angeschlossenen Übertragungsleitung, wenigstens einem Empfänger und einer Auswerteeinheit. Des Weitern betrifft die Erfindung ein Verfahren zur Maximierung der Empfindlichkeit einer RFID Schreib/Lesestation zum Auslesen von Informationen aus Transpondern.

Stand der Technik

Die der Erfindung zugrunde liegende Problematik besteht darin, dass zur Erzielung grosser Auslese-Reichweiten gleichzeitig hohe Sendeleistungen und hohe Empfängerempfindlichkeiten gewährleistet werden müssen. Dazu sind Signalveriuste zu minimieren, wie sie beispielsweise durch Fehlanpassung von Antenne und Sender oder langen Übertragungsleitungen entstehen können. Zudem muss die hohe Sendeleistung vom Empfänger ferngehalten werden damit dieser mit hoher Empfindlichkeit arbeiten kann. Die hohe Sendeleistung wird einerseits benötigt um die Transponder mit Energie zu versorgen und andererseits müssen die Transponder das Hochfrequenzträgersignal des Schreib-Lesegerätes zur Modulation benutzen.

Bestehende Technik löst jeweils nur Teilaspekte dieser Problematik. Traditionell, entsprechend den Lehrbüchern wird für induktiv arbeitende Systeme einfach die Spannung am Antennenfusspunkt oder Senderausgang abgegriffen und soweit abgeschwächt, bis die Sendespannung mit dem Empfängereingangsstufe verträglich ist. Die Abschwächung ist in den meisten Fällen so gross, dass die Empfindlichkeit gering ausfällt.

Die EP-1050839, gegen die Anspruch 1 abgegrenzt ist, offenbart ein RFID Lese- und Schreibgerät für kontaktlose Chipkarten. Das Gerät ist eingerichtet zur geregelten Energieabstrahlung und umfasst einen Viertor-Transformator zur Messung der Antennenadaption. Die Intensität des Ausgangssignals ist einstellbar, um die Zerstörung der empfangenden Chipkarte zu vermeiden.

Weiter beschreibt beispielsweise die DE-10353613 eine Schaltung, mit der das Stehwellenverhältnis der Antenne unter Betriebsbedingungen bestimmt werden und die Antennenanpassung nachgestimmt werden kann, ohne jedoch die Empfängerempfindlichkeit selber zu verbessern. In WO-2005052847 wird eine Signaltrennung mittels Richtkoppler in Stripline-Technik vorgestellt. Die damit mögliche Empfindlichkeitsverbesserung wird aber mit hohem Platzbedarf speziell bei tiefen Frequenzen und/oder Wirksamkeit nur über einen schmalen Frequenzbereich erkauft. Weitere Ausführungen benutzen ferromagnetische Elemente wie beispielsweise Zirkulatoren, mit denen Sende- und Empfangssignale in einem gewissen Ausmass voneinander getrennt werden können, ohne aber die Möglichkeit der Stehwellenmessung zu bieten, weil eine entsprechende Auskopplung von nur einem Teil des Sendesignals fehlt. Zudem wird lediglich eine Abschwächung des Sendesignals von etwa 20 dB erreicht; und nicht zuletzt wird auf der Sendeseite ein Verlust von 1 dB und mehr eingehandelt, was einen stärkeren Leistungssender erfordert für gleiche Ausgangsleistung.

Die oben beschriebene Problematik könnte grundsätzlich durch Verwendung einer geeigneten Auswahl der beschriebenen Schaltungen gelöst werden. Durch den damit verbundenen Aufwand wird aber ein entsprechendes System viel Platz beanspruchen, aufgrund dieser Ausdehnung erhöhte Signaldämpfung aufweisen, kritisch abzugleichen sein und nicht zuletzt sehr teuer werden.

Darstellung der Erfindung

Durch die Erfindung soll nun eine RFID Schreib-/Lesestation der eingangs genannten Art angegeben werden, die eine optimale Empfindlichkeit bei gleichzeitig hoher Sendeleistung erreicht und zudem die Messung des Stehwellenverhältnis unter Betriebsbedingungen über einen breiten Frequenzbereich ermöglicht, unter Verwendung von wenigen einfachen, robusten, preiswerten und äusserst Platz sparenden Bauteilen. Des Weiteren soll ein Verfahren angegeben werden, mit dem eine Maximierung der Empfindlichkeit einer RFID Schreib-/Lesestation erzielbar ist.

Setzt man eine gegebene Dämpfung des Antwortsignals vom Transponder in der Distanz d und eine im Empfänger durch den Stand der Technik gegebene Rauschleistung voraus, so ist das theoretisch maximal erreichbare Signal/Rauschverhältnis gegeben. Um in der Praxis einen hohen Dynamikbereich zu erreichen muss einerseits der Empfänger mit möglichst grossen Signalen arbeiten können und andererseits möglichst wenig vom Sendesignal an den Empfänger gelangen. Die Empfindlichkeit des Schreib-/Lesegerätes wird durch das Eigenrauschen des Empfängers und das dem Sendesignal anhaftende Seitenbandrauschen begrenzt. Um ein gutes Signal/Rauschverhältnis zu erhalten muss bis zum Empfänger das Sendesignal möglichst viel, das Antwortsignal aber möglichst wenig abgeschwächt werden und zudem muss der Sender seine Leistung möglichst verlustfrei an der Antenne zur Abstrahlung bringen. Das Optimum kann durch mehrere Massnahmen sukzessive erreicht werden. Verwenden eines optimierten Transformators, einer guten Anpassung der Antenne, einer grosssignalverträglichen Empfängereingangsstufe und einer Inphase/Quadrature-Demodulation.

Die der Erfindung für das RFID Schreib/Lesegerät zugrunde liegende Aufgabe wird gelöst durch die Merkmale des Anspruchs 1. Die diesen Erfindungsgedanken weiterführenden Merkmale sind Gegenstand der abhängigen Ansprüche 2 bis 7. Die der Erfindung für eine Maximierung der Empfindlichkeit einer RFID Schreib-/Lesestation zugrunde liegende Aufgabe wird gelöst durch den weiteren unabhängigen Anspruch 8.

Die Aufgabe für eine RFID Schreib-/Lesestation wird erfindungsgemäss im Kernteil dadurch gelöst, dass mittels Transformatoren in einer Transformatorschaltung eine breitbandige, leistungsfeste und einfach anpassbare Signaltrennung zwischen vorlaufenden (vom Sender zur Antenne) und rücklaufenden (von der Antenne zum Empfänger) Signalen erfolgt.

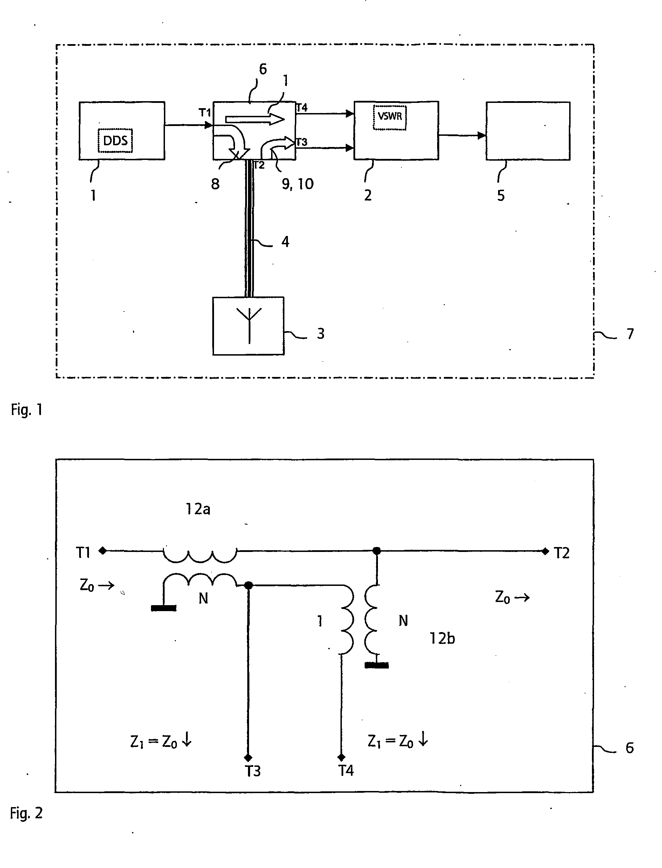

Eine erste bevorzugte Ausführungsform, dargestellt in Figur 2, ist dadurch gekennzeichnet, dass zwei im Wesentlichen identische Transformatoren als Strom- und Spannungskoppler eingesetzt werden. Die jeweiligen Wicklungen sind derart verbunden, dass die beiden Transformatoren ein Viertor bilden. An diesem Viertor sind die Tore T1-T3 und T2-T4 voneinander isoliert, während die Tore T1-T2, T2-T3 und T1-T4 genau vorausbestimmte Kopplungsfaktoren aufweisen.

Durch die konkrete Ausgestaltung der Transformatoren wie Wahl des Kernmaterials, Kernform, Windungszahl, gegenseitige Anordnung der Wicklungen etc. kann nicht nur die gewünschte Kopplung und Isolation zwischen den Toren sondern auch der nutzbare Frequenzbereich und die maximal übertragbare Leistung in weiten Grenzen entsprechend den jeweiligen Bedürfnissen eingestellt werden. Ein ausgeführtes Beispiel einer solchen Schaltung verwendet für 13.56 MHz und eine $Z_0$ = 50 Ohm Übertragungsleitung einen NiZn-Kern mit 2 respektive 20 Windungen für einen Kopplungsfaktor der Tore T2-T4 von -20 dB. Dies erlaubt einen Frequenzbereich von 6-36 MHz, eine maximale Leistung von 20 W, eine Isolation der Tore T1-T3 bzw. T2-T4 von >50 dB, eine Kopplung der Tore T2-T3 bzw. T1-T4 von -20 dB und eine Kopplung der Tore T1-T2 von < -0.1 dB. Das von dieser Schaltung eingenommene Volumen beträgt ca. 2 Kubikzentimeter. ,

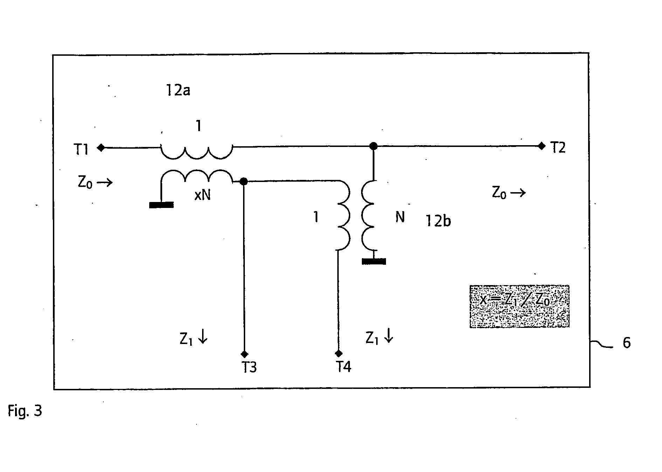

Eine zweite bevorzugte Ausführungsform, dargestellt in Figur 3, ist dadurch gekennzeichnet, dass die benutzten Transformatoren nicht identisch und/oder mit mehr als zwei getrennten Wicklungen ausgeführt sind und damit unterschiedliche Kopplungsfaktoren und Wellenimpedanzen an den einzelnen Toren realisierbar sind, ohne den nutzbaren Frequenzbereich einzuschränken. Auf diese Weise können z.B. hochohmige Mischerschaltungen optimal angepasst werden.

Eine weitere bevorzugte Ausführung ist dadurch gekennzeichnet, dass mehrere umschaltbare Transformator-Paare benutzt werden, damit unterschiedliche Kopplungsfaktoren für unterschiedliche Sendeleistungen oder während der Abstimmung des Senders und der Antenne oder anderer Betriebsarten zur Verfügung stehen.

Eine dritte bevorzugte Ausführungsform der erfindungsgemässen. RFID Lesestation ist dadurch gekennzeichnet, dass der oder die Empfänger im Unterschied zu den üblichen Ankopplungen des Empfängereingangs ohne weitere Anpass- oder Abschwächglieder mit der Transformatorschaltung verbunden ist bzw. sind und damit das Minimum an Dämpfung für das Antwortsignal herbeiführen.

Eine weiter verbesserte, bevorzugte Ausführungsform der erfindungsgemässen RFID Lesestation ist dadurch gekennzeichnet, dass im Empfänger bzw. in den Empfängern Halbleiterschalter als Mischer verwendet werden, welche eine hohe Aussteuerung am Empfängerausgang, der mit dem Tor T3 verbunden ist, erlauben. Ein ausgeführtes Beispiel kann Signale bis zu einer Spannung von 6 $V_{pp}$ verarbeiten.

Eine weiter verbesserte und bevorzugte Ausführungsform der erfindungsgemässen RFID Lesestation ist dadurch gekennzeichnet, dass Sender und Empfänger ohne Leistungseinschränkung über den vollen oder einen Teil des gewählten Frequenzbereichs eingesetzt werden können und die Frequenzeinstellung mittels direkter digitaler Synthese (DDS) erfolgt, was instantane Frequenzänderung und fast beliebige Frequenzauflösung bis weniger als 1 Hz erlaubt

Eine weitere bevorzugte Ausführungsform der erfindungsgemässen RFID Schreib-/Lesestation ist dadurch gekennzeichnet, dass die Signale an den gekoppelten Toren zur Bestimmung des komplexen Stehwellenverhältnisses über den gesamten Frequenzbereich und bis zur Maximalleistung verwendet werden, was eine deutlich präzisere Abstimmung der Antenne und damit minimale Reflektion von Sendesignalen in den Empfänger erlaubt.

Eine weitere bevorzugte Ausführungsform der erfindungsgemässen RFID Schreib-/Lesestation ist dadurch gekennzeichnet, dass aufgrund der Verwendung von Inphase- und Quadrature-Phase -Empfängerzweigen die Länge der Übertragungsleitung zwischen Lesestation und Antenne beliebig sein kann und insbesondere nicht ganzzahlige Bruchteile oder Vielfache einer Wellenlänge umfassen müssen. Dies bietet insbesondere bei tiefen Frequenzen, zum Beispiel 13.56 MHz mit einer Wellenlänge von etwa 15 m (auf der Übertragungsleitung) einen applikatorischen Vorteil.

Kurze Beschreibung der Zeichnung

Im Folgenden wird die Erfindung anhand von Figuren beispielhaft erläutert. Gleiche Gegenstände sind in den Figuren grundsätzlich mit gleichen Bezugszeichen bezeichnet. Es zeigen rein schematisch die

Fig. 1    zeigt ein Blockschaltbild einer erfindungsgemässen RFID Schreib-/Lesestation mit hoher Empfindlichkeit;

Fig. 2    zeigt ein erstes Beispiel einer erfindungsgemässen Transformatorschaltung mit einem identischen Windungsverhältnis von 1:N bei beiden Transformatoren und

Fig. 3    zeigt ein zweites Beispiel einer erfindungsgemässen Transformatorschaltung mit einem Windungsverhältnis
von 1:N beim einen und ein solches von 1:xN beim anderen Transformator, wobei x gleich dem Verhältnis der
Wellenimpedanz an den Toren T3, T4 zur Wellenimpedanz an den Toren T1, T2 ist.


Wege zur Ausführung der Erfindung

Im Folgenden wird die Erfindung anhand eines in Figur 1 dargestellten Ausführungsbeispiels näher erläutert.

Die dargestellte Lesestation 7 besteht aus einem Sender 1, einem Empfänger 2, einer Antenne 3 mit einer
Übertragungsleitung 4, einer Auswerteeinheit 5 und der erfindungsgemässen Transformatorschaltung 6. Nicht dargestellt
sind ein oder mehrere Transponder, die sich im Wirkbereich der Antenne befinden und deren Informationen mit der
Lesestation ausgelesen werden sollen.

Der Sender 1 wird im normalen Betrieb auf einer fixen Frequenz gemäss den geltenden Vorschriften betrieben
und versorgt über elektromagnetische Kopplung die im Wirkbereich der Antenne 3 liegenden Transponder mit elektrischer
Energie. Um Meldungen von der Lesestation 7 zu den Transpondern zu übermitteln kann das Sendesignal 8 in der
Amplitude, der Phase, der Frequenz oder einer Kombination daraus moduliert werden. Das Sendesignal 8 läuft vom
Sender 1 über die Transformatorschaltung 6, die Übertragungsleitung 4 zur Antenne 3 und dann mittels elektromagnetischer Kopplung zu den Transpondern.

Die Transponder können ihrerseits Informationen an die Lesestation 7 senden indem sie einen Teil des vom
Sender 1 stammenden empfangenen Signals in der Amplitude, der Phase, der Frequenz oder einer Kombination daraus
entsprechend der zu sendenden Information modulieren und mittels elektromagnetischer Kopplung zur Lesestation 7
zurückschicken. Ein entsprechendes Transpondersignal 9 wird von der Antenne 3 empfangen, über die Übertragungsleitung 4 der Transformatorschaltung 6 zugeführt und erreicht von dort den Empfänger 2 und die Auswerteeinheit 5, wo
die Information dekodiert und zur Weiterverwendung bereitgestellt wird. Typischerweise liegt der Signalpegel des Transpondersignals 9 in der Grössenordnung von 100 Mikrovolt in einem 50 $\Omega$ System.

Die Transformatorschaltung 6 sorgt dafür, dass die Sendesignale 8 von Sender 1 hauptsächlich zur Antenne
3 gelangen, ein einstellbarer Sendersignalanteil 11 dieses vorlaufenden Sendesignals 8 erscheint auch an Tor T4 der
Transformatorschaltung 6 und wird wie später beschrieben zur Bestimmung des Stehwellenverhältnisses benutzt. Das
mit dem Empfänger 2 verbundene Tor T3 hingegen ist vom Sender 1 an Tor T1 isoliert, d.h. die direkt vom Sender 1
stammende Signalspannung an Tor T3 ist theoretisch exakt Null für jede beliebige Senderausgangsleistung.

Analog werden von Antenne 3 empfangene Transpondersignale 9 über die Tore T2-T3 der Transformatorschaltung 6 dem Empfänger 2 zugeführt. Tor T4 ist dabei von Tor T2 isoliert, d.h. die Signalspannung an Tor T4 ist
unabhängig von Signalen, die an Tor T2 einlaufen.

Ist nun die Antenne 3 schlecht angepasst, wird ein entsprechender Teil des Sendesignals 8 an der Antenne
reflektiert. Dieses reflektierte Reflexionssignal 10 erreicht die Transponder nicht, ist aber zuerst einmal nicht von einem
gewünschten Transpondersignal 9 eines Transponders zu unterscheiden und erreicht den Empfänger 2 auf dem gleichen
Weg wie ein Nutzsignal. Dadurch wird der Empfang dieses Nutzsignals erschwert oder sogar verunmöglicht, in der
Funktechnik wird dafür der englische Begriff 'Jamming' (etwa: zustopfen) verwendet. Dieses Reflexionssignal 10 kann
die maximale Eingangsspannung am Empfänger überschreiten und diesen entweder zerstören oder als Folge der
Nichtlinearität für das Transpondersignal 9 unempfindlich machen.

Der in der Transformatorschaltung 6 ausgekoppelte Strom I und die ausgekoppelte Spannung U sind proportional gegeben durch folgende Beziehungen:

$$I \propto (U_h - U_r)/Z_0 \qquad ; \qquad U \propto U_h + U_r$$

Wobei $U_h$ der hinlaufenden Welle und $U_r$ der rücklaufenden Welle entsprechende Spannungen und $Z_0$ dem
Wellenwiderstand der Übertragungsleitung 4 entsprechen. Diese Grössen sind weiter skaliert durch das Übertragungsverhältnis der Transformatorschaltung 6 und deren Abschlussimpedanzen Z1 an Tor T3 und T4 und erlauben eine
flexible Anpassung an die übrigen Baugruppen der Lesestation. Durch schaltungsgemässe Addition bzw. Subtraktion
der Signale werden die beiden Anteile $U_h$ der hinlaufenden Welle und $U_r$ der rücklaufenden Welle in der Transformatorschaltung 6 zurückgewonnen und an den Toren T4 bzw. T3 zur Verfügung gestellt.

Wird die Signalspannung an Tor T3 mit $U_a$ und die Spannung am Tor T4 mit $U_b$ bezeichnet, kann daraus der
komplexe Reflektionsfaktor r bestimmt werden zu

$$\Gamma = \frac{U_a}{U_b}$$

Das Stehwellenverhältnis VSWR errechnet sich dann zu

$$VSWR = \frac{1 + |\Gamma|}{1 - |\Gamma|}$$

Es ist leicht zu sehen, dass beispielsweise für ein VSWR = 1.2 (das vom Funk-Fachmann in der Regel noch als 'gut angepasst' gilt) die reflektierte Spannung rund 10% der vom Sender 1 erzeugten Spannung ausmacht. Bei 20 W Sendeleistung ergibt dies immerhin eine Eingangsspannung von etwa 9 $V_{pp}$ in einem 50 $\Omega$ System.

Durch bessere manuelle oder automatische Anpassung der Antenne 3 wird man nun versuchen, das Reflexionssignal 10 deutlich weiter zu minimieren. Dazu werden in einer dem Fachmann bekannten Weise Komponenten in der Antenne 3 so variiert, dass das Stehwellenverhältnis bei der Betriebsfrequenz möglichst gleich Eins wird. Dieser Abgleich wird in besonderem Masse vereinfacht, wenn das Stehwellenverhältnis über einen gewissen Frequenzbereich um die Betriebsfrequenz herum gemessen werden kann. Dies ist durch die Aufbereitung der Sendefrequenz mittels direkter digitaler Synthese (DDS) besonders einfach möglich. In der Praxis wird man sich auf einige diskrete Frequenzpunkte beschränken und die Zwischenwerte gegebenenfalls interpolieren.

In einigen Fällen sind die Komponenten zur Antennenanpassung nur in diskreten Schritten einstellbar. Sollte die damit erreichbare Güte der Anpassung nicht ausreichend sein, kann durch einfache Frequenzänderung ein Betriebspunkt mit besserer Anpassung gewählt werden. Solche diskret einstellbaren Antennen-Anpassschaltungen haben den Vorteil, dass sie kostengünstiger und sehr einfach digital ansteuerbar sind.

Der Empfänger 2 kann typischerweise Eingangssignale bis zu einem bestimmten Maximalpegel verarbeiten. Steigen die Signalamplituden über diesen Wert, ist die Empfangsfunktion eingeschränkt oder gar nicht mehr möglich, weil zu viele störende Signale durch die Nichtlinearität der Halbleiterbauelemente das Nutzsignal korrumpieren; oder der Empfänger wird überlastet und im Extremfall zerstört. Für maximale Empfindlichkeit des Empfängers 2 sollte der Kopplungsfaktor von Tor T2 auf Tor T3 der Transformatorschaltung 6 also möglichst hoch sein, gleichzeitig muss aber der maximal mögliche Signalpegel am Eingang von Empfänger 2 unter dem Maximalpegel liegen. Werden für die Empfangsmischer am Eingang des Empfängers 2 Halbleiterschalter, z.B. in CMOS oder GaAsTechnologie, verwendet, anstelle der üblichen Dioden- oder Transistormischer, so wird nicht nur ein deutlich höherer Maximalpegel im Volt-Bereich erreicht, sondern auch eine wesentlich geringere Steuerleistung für die Schalter benötigt als dies mit üblichen Mischern der Fall ist In einem Ausführungsbeispiel wurde ein Maximalpegel von 6 $V_{pp}$ erreicht. Mit dieser Massnahme wird der Dynamikbereich des Empfängers 2 markant vergrössert.

Durch die einfache Einstellbarkeit des Kopplungsfaktors der Transformatorschaltung 6 kann dieser somit den maximal möglichen Signalpegeln angepasst und damit maximale Empfindlichkeit erreicht werden, ohne dass zusätzliche Anpass- oder Abschwächglieder notwendig sind. In einem Ausführungsbeispiel mit einem Kopplungsfaktor von -20 dB werden bei einer Sendeleistung von 20 W und einem VSWR von 1.2 in einem 50 $\Omega$ System noch 900 $mV_{pp}$ vom Sendesignal 8 und etwa 10 Mikrovolt vom Transpondersignal 9 auf den Empfänger 2 treffen. Der Maximalpegel wird damit nicht überschritten und die Dynamik von 100 dB kann durch den Empfänger verarbeitet werden.

Wird z.B. die maximal erwartete Amplitude des Senders 1 mit $U_S$ und der Maximalpegel für den Empfänger mit $U_E$ bezeichnet, errechnet sich der notwendige Kopplungsfaktor k32 zwischen Tor T3 und Tor T2 zu

$$k_{32} = \frac{U_E}{U_S}.$$

Im in Figur 2 dargestellten Beispiel einer erfindungsgemässen Transformatorschaltung 6 ergibt sich das Windungsverhältnis N wie bei allen Transformatoren 12a, 12b üblich gleich dem Spannungsverhältnis an den Toren, d.h. in diesem Beispiel zu

$$N = \frac{U_S}{U_E} = \frac{1}{k_{32}}$$

Im gezeigten Beispiel einer erfindungsgemässen Transformatorschaltung 6 herrscht Symmetrie, d.h. die Kopplungsverhältnisse an den Toren T1-T4 ($k_{41}$) und T2-T3 ($k_{32}$) sind identisch. Aufgrund der Energieerhaltung in geschlossenen Systemen und unter Berücksichtigung der praktisch vollständigen Isolation T1-T3, T2-T4 (typische Werte > 50 dB) kann direkt die Einfügungsdämpfung $k_{21}$ an den Toren T1-T2 berechnet werden zu

$$k_{21} = \sqrt{1 - (k_{41})^2} = \sqrt{1 - (k_{32})^2}$$

Dieser theoretische Wert für $k_{21}$ wird in der Realität leicht schlechter ausfallen aufgrund von Verlusten in den Windungen und im Kernmaterial. Durch entsprechende Wahl der Ausführung kann dieser Einfluss aber minimiert werden, so dass die oben gezeigte Formel eine gute Abschätzung der Wirklichkeit darstellt. Ein Beispiel ergibt für einen Kopplungsfaktor $k_{32}$ von -20 dB eine Einfügungsdämpfung $k_{21}$ von weniger als 0.1 dB.

In der Praxis wünschenswert ist eine der jeweiligen Installation angepasste, möglichst kurze Länge der Übertragungsleitung 4. In einem Einkanal-Empfänger ist aber, wie dem Fachmann bekannt ist, die Empfangsamplitude abhängig von der korrekten Phasenlage des Empfangssignals im Bezug zum Sendesignal 8, was nur mit bestimmten Längen der Übertragungsleitung 4 gewährleistet ist. Dies bedeutet konkret, dass immer eine längere Übertragungsleitung 4 gewählt werden muss, als dies von der Installation her notwendig wäre, was zu zusätzlicher Signaldämpfung führt und unpraktisch bei der Installation ist. Zudem ist nur Betrieb auf einer Frequenz möglich, da eine Frequenzänderung automatisch auch eine notwendige Änderung der Länge der Übertragungsleitung 4 nach sich zieht, um die Phasenbeziehung aufrecht zu erhalten.

Eine diesbezügliche weitere Steigerung der Empfindlichkeit insbesondere bei beliebiger Länge der Übertragungsleitung 4 wird durch Verwendung von zwei Empfangszweigen erreicht, wobei der eine Zweig für Empfangssignale 9 einer bestimmten Phasenlage empfindlich ist, während der zweite Zweig für Empfangssignale 9 mit einer zum ersten Zweig um 90° verschobenen Phasenlage empfindlich ist. Dieses in der Funktechnik unter dem Kürzel 'I/Q' (für Inphase und Quadraturephase) bestens bekannte Prinzip resultiert immer in der maximal möglichen Empfangsamplitude, unabhängig von der Phasenlage oder Phasenänderungen des Empfangssignals 9 über der Zeit. Voraussetzung dafür ist vektorielle Weiterverarbeitung der beiden Empfänger-Ausgangssignale, was dem Stand der Technik entspricht

In geschlossenen Anlagen kann eine noch weiter gehende Steigerung der Empfindlichkeit erreicht werden in den Fällen, wo aufgrund der örtlichen Gegebenheiten (z.B. metallische Objekte, ungewöhnliche Temperatur, Feuchtigkeit etc.) oder aufgrund von Herstellungs- oder Abgleich-Toleranzen die Resonanzfrequenz der Empfangskreise der Transponder von der vorgesehenen Sendefrequenz abweichen und somit nicht die volle Leistung empfangen bzw. zurücksenden können. Durch die einfache Einstellung der Betriebsfrequenz des Senders 1 mittels DDS, sowie der breitbandigen Abstimmbarkeit und den breitbandigen Kopplern kann diese so justiert werden, dass die Sendefrequenz mit der Frequenz maximaler Empfindlichkeit der Transponder bzw. der gesamten Empfangskette Transponder - Antenne 3 übereinstimmt und so der optimale Betriebspunkt wieder hergestellt ist

Die erfindungsgemässe RFID Schreib-/Lesestation hat die Hauptvorteile, dass für jeden Anwendungsfall die bestmögliche Empfindlichkeit und damit verbunden höchste Reichweite und kleinste Lese-Fehlerrate erreicht wird, dies mit geringem Mehraufwand an Bauteilen und Platzbedarf im Vergleich zu herkömmlichen Lesestationen.

Bezugszeichen

1        Sender

2        Empfänger

3        Antenne

4        Übertragungsleitung

5       Auswerteeinheit

6       Transformatorschaltung

7       RFID Schreib-/Lesestation

8       Sendesignal

9       Transpondersignal

10      Reflexionssignal

11      Sendesignalanteil

12a, b  Transformatoren


**Patentansprüche**

1.  RFID Schreib-/Lesestation (7) zum Auslesen von Informationen aus in der Regel passiven Transpondern, die RFID Schreib-/Lesestation (7) bestehend aus einem Sender (1), wenigstens einer Antenne (3) mit einer angeschlossenen Übertragungsleitung (4), wenigstens einem Empfänger (2) und einer Auswerteeinheit (5), wobei mindestens eine Transformatorschaltung (6) zur Trennung eines Sendesignals (8) von einem Transpondersignal (9), wobei die Transformatorschaltung zwischen dem Sender (1) und dem Empfänger (2) angeordnet ist, wobei die Transformatorschaltung (6) als ein Viertor mit einem ersten, einem zweiten, einem dritten und einem vierten Tor (T1, T2, T3, T4) ausgebildet ist mit getrennt einstellbaren Kopplungsfaktoren zwischen den einzelnen Toren (T1, T2, T3, T4), **dadurch gekennzeichnet, dass** die RFID Schreib-/Lesestation (7) zur Messung eines Stehwellenverhältnisses der Antenne (3) ausgebildet ist, wobei eine Sendefrequenz des Senders (1) in einem gewissen Bereich und mit voller Ausgangsleistung variierbar ist und die Signale an der Transformatorschaltung (6) zur Bestimmung eines Stehwellenverhältnisses in diesem Sendefrequenzbereich nutzbar sind.

2.  RFID Schreib-/Lesestation gemäß Anspruch 1, wobei die Transformatorschaltung (6) aus mindestens zwei identischen oder nicht identischen Transformatoren (12a, 12b) mit je zwei oder mehr als zwei separaten Wicklungen bestehen, wobei der Kopplungsfaktor zwischen dem ersten Tor (T1) und dem dritten Tor (T3) so klein ist, dass eine Isolation zwischen dem ersten Tor (T1) und dem dritten Tor (T3) von mindestens 30 dB über einen Frequenzbereich von mindestens einer Oktave bereitstellbar ist.

3.  RFID Schreib-/Lesestation gemäß Anspruch 2, wobei durch eine Ausgestaltung der Transformatoren (12a, 12b) hinsichtlich einer Windungszahl, eines Kernmaterials, bzw. einer Kernform, einer gegenseitigen Lage der Wicklungen, der Kopplungsfaktoren zwischen den Toren (T1, T2, T3, T4), der Frequenzgang und der Impedanzen an den Toren (T1, T2, T3, T4) einstellbar ist und ein nahezu frequenzunabhängiges und kompaktes Bauvolumen erreichbar ist.

4.  RFID Schreib-/Lesestation gemäß Anspruch 3, wobei die Kopplungsfaktoren und die Impedanzen an den Toren (T1, T2, T3, T4) für eine maximale Empfindlichkeit der RFID Schreib/Lesestation (7) wählbar sind, unter Berücksichtigung einer maximal auftretenden Ausgangsspannung des Senders (1) und einer maximal erlaubten Eingangsspannung des Empfängers (2).

5.  RFID Schreib-/Lesestation gemäß Anspruch 4, wobei mehrere Transformatoren (12a, 12b) umschaltbar zwischen Übertragungsleitung (4) und Empfänger (3) angeordnet sind, damit bei verschiedenen Betriebsarten eine angepasste Empfänger-Empfindlichkeit erreichbar ist.

6.  RFID Schreib-/Lesestation gemäß Anspruch 5, wobei die Frequenzeinstellung mittels einer direkten digitalen Synthese (DDS) im Sender (1) vornehmbar ist.

7.  RFID Schreib-/Lesestation gemäß Anspruch 1 bis 6, wobei der Empfänger (2) zwei getrennte Empfangszweige mit einer I/Q-Mischung und einer vektoriellen Signalverarbeitung aufweist, wobei die Qualität der Empfindlichkeit des Empfängers (2) frei ist von der Länge der Übertragungsleitung (4).

8. Verfahren zur Maximierung der Empfindlichkeit einer RFID Schreib-/Lesestation gemäß Anspruch 1 bis 7, wobei eine Antenne (3) in einem ersten Schritt mittels Messung eines Stehwellenverhältnisses über einen bestimmten Frequenzbereich und bei voller Leistung automatisch oder manuell abgestimmt und eingestellt wird, in einem zweiten Schritt die Abstimmung bestmöglich bei einer bestimmten Frequenz verfeinert wird und anschließend ein Transpondersignal (9) der Transponder in einem Empfänger (2) bei einem kleinstmöglichem Kopplungsfaktor einer Transformatorschaltung (6) zwischen dem Empfänger (2) und einem Sender (1) auf den Empfänger (2) gegeben wird.

9. Verfahren nach Anspruch 9, wobei während dem Betrieb der RFID Schreib-/Lesestation (7) eine Feinabstimmung im Empfänger (2) mit Hilfe des Transpondersignals (9) und des Reflexionssignals (10) am dritten Tor (T3) der Transformatorschaltung (6) erfolgt.

**Claims**

1. RFID read/write station (7) for reading out information from typically passive transponders, said RFID read/write station (7) consisting of a transmitter (1), at least one antenna (3) with a transmission line (4) connected thereto, at least one receiver (2) and an evaluating unit (5), wherein at least one transformer circuit (6) is provided for separating a transmitted signal (8) from a transponder signal (9), wherein the transformer circuit (6) is arranged between the transmitter (1) and the receiver (2), wherein the transformer circuit (6) is configured as a 4-port circuit having a first, a second, a third and a fourth port (T1, T2, T3, T4) and with separately settable coupling factors between the individual ports (T1, T2, T3, T4), **characterised in that** the RFID read/write station (7) is configured for measuring a standing-wave ratio of the antenna (3), wherein a transmission frequency of the transmitter (1) is variable within a particular range and at full output power, and the signals at the transformer circuit (6) are usable for determining a standing-wave ratio within said transmission frequency range.

2. RFID read/write station according to claim 1, wherein the transformer circuit (6) comprises at least two identical or non-identical transformers (12a, 12b), each having two or more separate windings, wherein the coupling factor between the first gate (T1) and the third gate (T3) is so small that insulation of at least 30dB can be provided between the first gate (T1) and the third gate (T3) over a frequency range of at least one octave.

3. RFID read/write station according to claim 2, wherein by means of a design of the transformers (12a, 12b) with regard to a number of turns, a core material or a core shape, a mutual position of the windings, and the coupling factors between the gates (T1, T2, T3, T4), the frequency response and the impedances at the gates (T1, T2, T3, T4) are adjustable and a compact and almost frequency-independent structural volume can be achieved.

4. RFID read/write station according to claim 3, wherein the coupling factors and the impedances at the gates (T1, T2, T3, T4) are selectable for a maximum sensitivity of the RFID read/write station (7), taking account of a maximum occurring output voltage of the transmitter (1) and a maximum allowed input voltage of the receiver (2).

5. RFID read/write station according to claim 4, wherein a plurality of transformers (12a, 12b) are switchably arranged between the transmission line (4) and the receiver (3), in order that an adjusted receiver sensitivity can be achieved in different operating modes.

6. RFID read/write station according to claim 5, wherein the frequency setting can be carried out by means of direct digital synthesis (DDS) in the transmitter (1).

7. RFID read/write station according to claims 1 to 6, wherein the receiver (2) has two separate receiving branches with I/Q mixing and vectorial signal processing, wherein the quality of the sensitivity of the receiver (2) is independent of the length of the transmission line (4).

8. Method for maximising the sensitivity of an RFID read/write station according to claims 1 to 7, wherein, in a first step, an antenna (3) is adjusted and tuned automatically or manually by measuring a standing wave ratio over a particular frequency range and at full power, in a second step, the adjustment is refined as well as possible at a particular frequency and, subsequently, a transponder signal (9) from the transponder in a receiver (2) is passed to the receiver (2) at the smallest possible coupling factor of a transformer circuit (6) between the receiver (2) and a transmitter (1).

9. Method according to claim 8, wherein during operation of the RFID read/write station (7), a fine adjustment takes place in the receiver (2) with the aid of the transponder signal (9) and of the reflection signal (10) at the third gate (T3) of the transformer circuit (6).

**Revendications**

1. Station de lecture/écriture de radio-identification RFID (7), soit Radio-Frequency Identification, pour lire des informations provenant de transpondeurs généralement passifs, la station de lecture/écriture RFID (7) étant constituée par un émetteur (1), au moins une antenne (3) avec une ligne de transmission (4) qui y est connectée, au moins un récepteur (2) et une unité d'évaluation (5), dans laquelle au moins un circuit de transformateur (6) permet de séparer un signal émis (8) d'un signal de transpondeur (9), dans laquelle le circuit de transformateur est agencé entre l'émetteur (1) et le récepteur (2), dans laquelle le circuit de transformateur (6) est constitué par un commutateur à quatre accès avec une première porte, une deuxième porte, une troisième porte et une quatrième porte (T1, T2, T3, T4), avec des facteurs de couplage entre les portes individuelles (T1, T2, T3, T4) qui peuvent être réglés séparément,
**caractérisée**
**en ce que** la station de lecture/écriture RFID (7) est constituée pour mesurer un rapport d'ondes stationnaires de l'antenne (3), dans laquelle une fréquence d'émission de l'émetteur (1) peut varier dans une plage déterminée et à pleine puissance de sortie, et les signaux du circuit de transformateur (6) peuvent être utilisés pour déterminer un rapport d'ondes stationnaires dans cette plage de fréquence d'émission.

2. Station de lecture/écriture RFID selon revendication 1, dans laquelle le circuit de transformateur (6) consiste en au moins deux transformateurs (12a, 12b) identiques ou non, avec chacun deux bobinages séparés ou plus, dans laquelle le facteur de couplage entre la première porte (T1) et la troisième porte (T3) est si petit qu'une isolation d'au moins 30 dB peut être obtenue entre la première porte (T1) et la troisième porte (T3) sur une plage de fréquence d'au moins un octave.

3. Station de lecture/écriture RFID selon revendication 2, dans laquelle un mode de réalisation permet de régler les transformateurs (12a, 12b) en fonction d'un nombre de spires, d'un matériau de noyau ou d'une forme de noyau, d'une position respective des bobinages, des facteurs de couplage entre les portes (T1, T2, T3, T4), de la réponse en fréquence et des impédances aux portes (T1, T2, T3, T4), et un volume de construction compact et pratiquement indépendant de la fréquence peut être obtenu.

4. Station de lecture/écriture RFID selon revendication 3, dans laquelle les facteurs de couplage et les impédances aux portes (T1, T2, T3, T4) peuvent être sélectionnés pour une sensibilité maximale de la station de lecture/écriture RFID (7), en prenant en compte l'occurrence d'une tension de sortie maximale de l'émetteur (1) et une tension d'entrée maximale permissible du récepteur (2).

5. Station de lecture/écriture RFID selon revendication 4, dans laquelle plusieurs transformateurs (12a, 12b) sont agencés entre la ligne de transmission (4) et le récepteur (3) de manière commutable, de façon à ce qu'une sensibilité de récepteur adaptée puisse être obtenue dans différents modes de fonctionnement.

6. Station de lecture/écriture RFID selon revendication 5, dans laquelle le réglage de fréquence peut être mis en oeuvre dans l'émetteur (1) à l'aide d'une synthèse numérique directe (DDS), soit Direct Digital Synthesis.

7. Station de lecture/écriture RFID selon l'une des revendications 1 à 6, dans laquelle le récepteur (2) comporte deux branches de réception séparées avec un mélange I/Q et un traitement de signal vectoriel, dans laquelle la qualité de sensibilité du récepteur (2) n'est pas restreinte par la longueur de la ligne de transmission (4).

8. Procédé de maximisation de la sensibilité d'une station de lecture/écriture RFID selon l'une des revendications 1 à 7, dans laquelle, dans une première étape, une antenne (3) est réglée et ajustée automatiquement ou manuellement à l'aide de la mesure d'un rapport d'ondes stationnaires sur une plage de fréquence déterminée et à pleine puissance, dans une deuxième étape, le réglage est affiné de manière optimale à une fréquence déterminée, et ensuite un signal de transpondeur (9) du transpondeur dans un récepteur (2) est fourni sur le récepteur (2) avec un facteur de couplage d'un circuit de transformateur (6) aussi petit que possible entre le récepteur (2) et un émetteur (1).

9. Procédé selon la revendication 9, dans lequel, durant le fonctionnement de la station de lecture/écriture RFID (7), un réglage fin est effectué dans le récepteur (2) à l'aide du signal de transpondeur (9) et du signal de réflexion (10) à la troisième porte (T3) du circuit de transformateur (6).

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1050839 A
- DE 10353613
- WO 2005052847 A